# FASCICULE DE BREVET EUROPEEN

(11) **EP 3 105 073 B1**
(45) Date de publication et mention de la délivrance du brevet: **04.04.2018**
(21) Numéro de dépôt: 15706887.5
(22) Date de dépôt: 04.02.2015
(51) Int. Cl.: B60K 6/12, B60K 6/445, B60K 25/02, B60W 10/06, B60W 10/08, B60W 20/00

(54) **PROCEDE DE CONTROLE D'UNE CHAINE DE TRACTION D'UN VEHICULE HYBRIDE HYDRAULIQUE, POUR L'ENTRAINEMENT DES ACCESSOIRES**
VERFAHREN ZUR STEUERUNG EINER ANTRIEBSEINHEIT EINES HYDRAULISCHEN HYBRIDFAHRZEUGS ZUM ANTRIEB VON NEBENAGGREGATEN
METHOD FOR CONTROLLING A POWERTRAIN OF A HYDRAULIC HYBRID VEHICLE, FOR DRIVING ACCESSORIES

(30) Priorité: 14.02.2014 FR 1451174
(43) Date de publication de la demande: 21.12.2016
(73) Titulaire: Technoboost, 75116 Paris (FR)
(72) Inventeur: SABRIE, Julien, 75013 Paris (FR); CAUBET, Roland, 92210 St Cloud (FR); MIRANDA, Paulo, 78960 Voisins Le Bretonneux (FR)
(74) Mandataire: Rosenberg, Muriel Sylvie
(86) Numéro de dépôt international: PCT/FR2015/050266
(87) Numéro de publication internationale: WO 2015/121566

(56) Documents cités:
- EP-A2- 0 645 271
- EP-A2- 1 197 371
- WO-A1-2006/051403
- US-A1- 2006 145 482
- US-A1- 2009 023 529

## Description

La présente invention concerne un procédé de gestion d'une chaîne de traction d'un véhicule automobile hybride, ainsi qu'une chaîne de traction et un véhicule automobile hybride comprenant des moyens mettant en oeuvre un tel procédé de gestion.

Les véhicules hybrides comportent généralement un moteur thermique alimenté par un carburant, formant une motorisation principale, et une deuxième motorisation reliée à une réserve d'énergie auxiliaire, qui peut fonctionner en moteur en consommant cette énergie, ou à l'inverse fonctionner en génératrice en produisant une énergie rechargeant cette réserve lors des freinages du véhicule. L'énergie auxiliaire peut être en particulier l'électricité, une pression hydraulique ou une pression pneumatique. Un procédé de contrôle d'une chaîne de traction d'un véhicule hybride selon le préambule de la revendication 1 est connu de EP 1 197 371 A2. Un type de transmission connu pour un véhicule automobile hybride hydraulique, présenté notamment par le document FR-A1-2973302, comporte un train planétaire comprenant une couronne reliée à un moteur thermique, un pignon planétaire relié à une pompe hydraulique, et un porte-satellites relié par un premier manchon de synchronisation à un différentiel de sortie entraînant les roues motrices.

Le train planétaire comporte un deuxième manchon de synchronisation qui réalise un blocage de ce train quand il est engagé, afin de faire tourner tous les éléments à la même vitesse.

La transmission comporte de plus une entrée liée à une machine hydraulique pouvant travailler en moteur ou en pompe, qui peut être reliée au différentiel de sortie par deux rapports de démultiplication différents, commandés par un troisième manchon de synchronisation.

La machine hydraulique ainsi que la pompe sont connectées à des accumulateurs de pression qui permettent de stocker une énergie lors du fonctionnement de la pompe, ou de la machine hydraulique travaillant en pompe délivrant un couple de freinage, et de la restituer à cette machine pour appliquer un couple moteur sur les roues motrices.

On obtient ainsi différents modes de fonctionnement comprenant notamment un mode « impulsionnel » sans émission de gaz avec une traction du véhicule uniquement par la machine hydraulique, le moteur thermique étant arrêté, et un mode « dérivation » avec une traction du véhicule par la machine hydraulique, ainsi que par le moteur thermique qui a démarré pour délivrer par le train planétaire un couple à la fois sur le différentiel de sortie, et sur la pompe fournissant une puissance hydraulique.

On obtient aussi un mode « rapport court » avec la pompe bloquée, le moteur thermique délivrant un couple élevé sur les roues motrices par le train planétaire formant un réducteur de vitesse, et un mode « rapport long » avec le moteur thermique délivrant un couple plus faible sur les roues motrices par le train planétaire bloqué au moyen du deuxième manchon de synchronisation.

Par ailleurs pour ces véhicules hybrides, généralement le moteur thermique entraîne directement des machines tournantes destinées à des fonctions accessoires, comme un alternateur de recharge du réseau de bord comprenant une batterie, un compresseur de climatisation, ou une pompe à vide d'assistance du freinage dans le cas d'un moteur du type Diesel.

Dans les modes de fonctionnement où le moteur thermique est arrêté, en particulier dans le mode impulsionnel, ces machines tournantes ne sont alors plus entraînées, et les fonctions accessoires peuvent être dégradées.

Pour le réseau de bord, on peut dans ce cas utiliser l'énergie stockée dans sa batterie afin d'alimenter les équipements électriques du véhicule, avec une tension réduite par rapport à la tension quand elle est en charge.

Toutefois certains équipements électriques de sécurité nécessitent des puissances importantes, comme la direction assistée électrique ou le système de contrôle de stabilité du véhicule « ESP », qui avec une forte consommation peuvent faire chuter la tension de la batterie du réseau de bord. Ce procédé peut poser des problèmes de sécurité, il est en particulier rédhibitoire au-dessus d'une certaine vitesse du véhicule.

Par ailleurs ces charges et décharges importantes et fréquentes peuvent réduire fortement la durée de vie de la batterie du réseau de bord. De plus la transformation d'énergie mécanique délivrée par le moteur thermique en énergie électrique stockée dans la batterie, pour la restituer ensuite aux équipements électriques, donne un rendement médiocre. La consommation de carburant n'est pas optimisée.

Une autre solution connue consiste à disposer en parallèle de la batterie du réseau de bord, un deuxième moyen de stockage d'énergie travaillant avec des tensions élevées et pouvant délivrer des puissances importantes, comme des super-capacités par exemple. Cependant cette solution nécessite un convertisseur de tension à partir du courant du réseau de bord. L'ensemble des moyens ajoutés comporte un coût important.

Pour la climatisation, une solution connue consiste à utiliser un moyen de stockage de froid comportant un produit à changement de phase, qui peut stocker et restituer une certaine réserve de froid lors de ses changements de phase. Cependant cette solution augmente l'encombrement et ajoute des coûts.

Pour la génération de vide de l'assistance du freinage, une solution connue consiste à ajouter une pompe à vide électrique. Cette solution dépendant de la charge de la batterie du réseau de bord, est aussi coûteuse, et pose de la même manière des problèmes d'encombrement

La présente invention a notamment pour but d'éviter ces inconvénients de la technique antérieure.

Elle propose à cet effet un procédé de contrôle d'une chaîne de traction d'un véhicule hybride, disposant d'un moteur thermique entraînant directement des machines tournantes de fonctions accessoires, d'une première machine auxiliaire utilisant une énergie auxiliaire qui dans un mode de fonctionnement réalise une traction du véhicule avec le moteur thermique pouvant rester arrêté, et d'une deuxième machine auxiliaire utilisant cette énergie, pouvant dans ce mode entraîner le moteur thermique, caractérisé en ce que dans ce mode de fonctionnement, en cas de nécessité d'entraînement des machines tournantes pour obtenir des fonctions accessoires, il commande la deuxième machine auxiliaire pour réaliser une rotation du moteur thermique, tout en maintenant son injection de carburant coupé.

Un avantage de ce procédé est que de manière simple et économique, sans ajouter de composant dans le véhicule, on obtient par la rotation du moteur thermique entraîné par la deuxième machine auxiliaire, à une vitesse ajustée pour limiter les pertes, un entraînement des machines tournantes des fonctions accessoires permettant d'assurer la sécurité et le confort nécessaires.

Le procédé de contrôle selon l'invention peut de plus comporter une ou plusieurs des caractéristiques suivantes, qui peuvent être combinées entre elles.

Avantageusement, le procédé de contrôle commande une rotation du moteur thermique à une vitesse inférieure à 1000 tr/m.

En particulier, le procédé de contrôle peut commander une rotation du moteur thermique à une vitesse comprise entre 600 et 750tr/m.

L'invention a aussi pour objet une chaîne de traction pour un véhicule hybride, comportant des moyens mettant en oeuvre un procédé de contrôle comprenant l'une quelconque des caractéristiques précédentes.

Avantageusement, la chaîne de traction comporte un train planétaire comprenant trois éléments reliant respectivement le moteur thermique, les roues motrices ainsi que la première machine auxiliaire, et la deuxième machine auxiliaire.

Selon un mode de réalisation, le moteur thermique est lié au porte-satellites du train planétaire, la couronne extérieure aux roues motrices, et le pignon planétaire à la deuxième machine auxiliaire.

En particulier, l'énergie auxiliaire peut être un fluide sous pression.

L'invention a de plus pour objet un véhicule hybride disposant d'une chaîne de traction utilisant une énergie auxiliaire, comprenant l'une quelconque des caractéristiques précédentes.

L'invention sera mieux comprise et d'autres caractéristiques et avantages apparaîtront plus clairement à la lecture de la description ci-après donnée à titre d'exemple, en référence aux dessins annexés dans lesquels :
- la figure 1 est un schéma d'une chaîne de traction pilotée par un procédé de contrôle selon l'invention ; et
- la figure 2 est un schéma présentant le fonctionnement de ce procédé de contrôle.

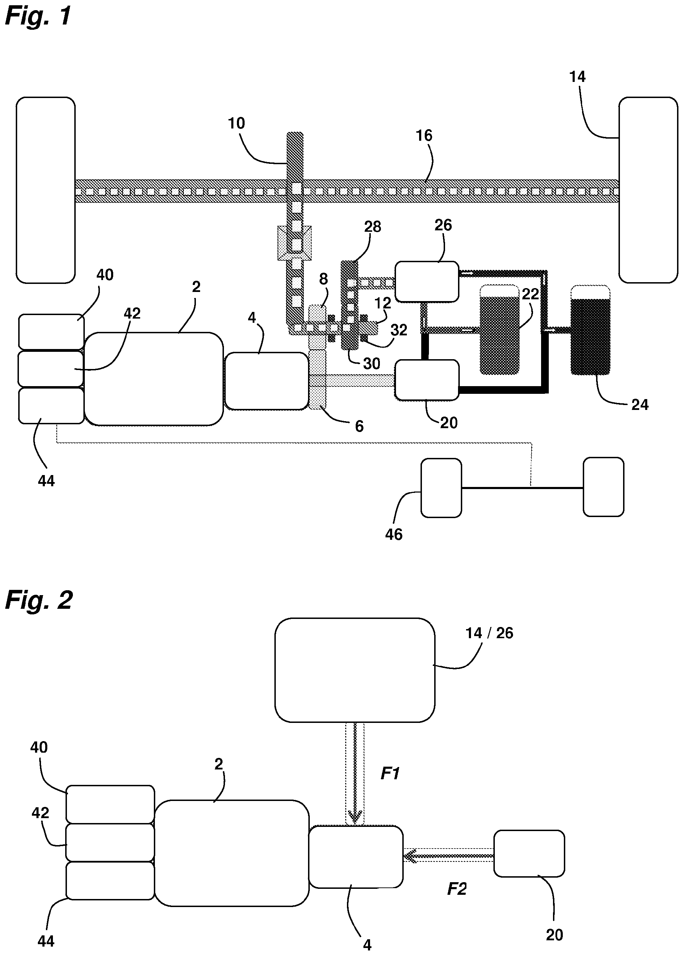

La figure 1 présente une chaîne cinématique d'un véhicule hybride hydraulique, comprenant un moteur thermique 2 entraînant le porte-satellites d'un train planétaire 4.

Le train planétaire 4 comporte une couronne extérieure liée à un pignon menant 6 entraînant un pignon mené 8 porté par un arbre parallèle 12, qui porte lui-même un pignon menant entraînant la couronne d'un différentiel 10. Le différentiel entraîne par des arbres de roue 16, les deux roues avant motrices 14 du véhicule.

Le train planétaire 4 comporte un pignon planétaire relié directement à une pompe hydraulique 20, qui reçoit le fluide d'un réservoir basse pression 24 pour recharger un réservoir haute pression 22. La pompe 20 peut fonctionner à l'inverse, en recevant une énergie du réservoir haute pression 22 afin de délivrer un couple moteur sur le train planétaire 4.

Une machine hydraulique réversible 26 comporte un arbre lié à un pignon menant 28 engrenant avec un pignon mené 30 supporté par l'arbre parallèle 12, qui peut être solidarisé avec cet arbre par un crabot 32 pour réaliser une liaison entre cette machine et les roues motrices 14.

La machine hydraulique 26 peut ainsi délivrer un couple moteur sur les roues 14, comme présenté par les traits pointillés, en recevant une énergie de l'accumulateur haute pression 22 comme présenté par les flèches. Elle peut aussi freiner le véhicule en fonctionnant en pompe, en rechargeant cet accumulateur.

La machine hydraulique 26 et la pompe 20 comportent une cylindrée variable, permettant d'ajuster en permanence le couple délivré ou reçu.

Pendant le fonctionnement en moteur de la machine hydraulique 26, le moteur thermique 2 peut être arrêté afin d'obtenir une traction sans émission de gaz polluants. On laisse alors la pompe 20 tourner librement sans couple résistant, notamment en ajustant sa cylindrée à une valeur nulle pour permettre cet arrêt du moteur thermique 2.

Le moteur thermique 2 entraîne directement, généralement par une courroie, des machines tournantes utilisées pour des fonctions accessoires, comme une pompe à vide 40, un compresseur de climatisation 42, et un alternateur 44 de recharge du réseau de bord comportant des batteries 46.

Dans le mode de fonctionnement sans émission de gaz polluant, comprenant la traction du véhicule par la machine hydraulique 26 avec le moteur thermique 2 à l'arrêt, on n'a alors plus d'entraînement des machines tournantes 40, 42, 44 des fonctions accessoires, liées à ce moteur.

Dans le cas présenté figure 2, d'un besoin d'une fonction accessoire, en particulier si le véhicule roule à une vitesse assez élevée, pour assurer une tension minimum dans les batteries du réseau de bord 46, ou un vide suffisant pour l'assistance du freinage, alors le procédé demande une mise en rotation du moteur thermique 2, qui est effectuée en ajustant la vitesse de la pompe 20.

Dans ce cas en réglant la cylindrée de la pompe 20, le procédé commande une certaine vitesse de cette pompe qui va être appliquée au pignon planétaire du train planétaire 4. La vitesse du porte-satellites étant fixée par celle des roues motrices 14, le train planétaire 4 applique alors une vitesse de rotation correspondante au moteur thermique 2, tout en maintenant son injection de carburant coupée.

On a alors dans ce cas un apport de puissance venant des roues motrices 14 et de la machine hydraulique 26, présenté par la flèche F1, qui est délivré au train planétaire 4, et un contrôle de la vitesse de rotation du moteur thermique 2 par la pompe 20, présentée par la flèche F2. La puissance consommée pour l'entraînement du moteur thermique 2 ainsi que des machines tournantes des fonctions accessoires 40, 42, 44, vient alors essentiellement de la machine hydraulique 26 et des roues 14.

On réalise ainsi un ajustement de la vitesse de rotation du moteur thermique 2, qui peut être contrôlé de manière continue par le réglage de la vitesse de la pompe 20. En particulier une vitesse de rotation du moteur thermique 2 inférieure à 1000tr/mn, avantageusement comprise entre 600 et 750tr/mn, réalise un compromis donnant des pertes réduites dans ce moteur tournant à vide, ainsi qu'une vitesse suffisante des machines tournantes 40, 42, 44 pour obtenir les fonctions qu'elles commandent.

A titre d'exemple, un type de moteur thermique comportant une vitesse de rotation de 700 tr/m peut prélever un couple de 10Nm, alors que les machines tournantes des fonctions accessoires 40, 42, 44 peuvent prélever un couple de 16Nm, ce qui fait un total de 26Nm à délivrer à ce moteur.

Avec un train planétaire 4 comprenant un rapport de 0,5, une vitesse de la pompe de 800tr/mn pour un véhicule roulant à 10 km/h donnera cette vitesse de rotation du moteur thermique.

On peut alors fournir une puissance de 1kW aux machines tournantes 40, 42, 44, en appliquant un couple de 17Nm sur la couronne qui est délivré par la machine hydraulique 26 et les roues motrices 14, et de 8Nm délivré par la pompe 20.

On obtient ainsi simplement et de manière économique, sans ajouter de matériel sur la chaîne de traction, avec seulement des compléments des logiciels pilotant les motorisations, une amélioration du confort ainsi que de la sécurité du véhicule. De plus la masse ainsi que l'encombrement de la chaîne de traction ne sont pas modifiés.

## Revendications

1. Procédé de contrôle d'une chaîne de traction d'un véhicule hybride, disposant d'un moteur thermique (2) entraînant directement des machines tournantes de fonctions accessoires (40, 42, 44), d'une première machine auxiliaire (26) utilisant une énergie auxiliaire qui dans un mode de fonctionnement réalise une traction du véhicule avec le moteur thermique pouvant rester arrêté, et d'une deuxième machine auxiliaire (20) utilisant cette énergie, pouvant dans ce mode entraîner le moteur thermique, **caractérisé en ce que** dans ce mode de fonctionnement, en cas de nécessité d'entraînement des machines tournantes (40, 42, 44) pour obtenir des fonctions accessoires, il commande la deuxième machine auxiliaire (20) pour réaliser une rotation du moteur thermique (2), tout en maintenant son injection de carburant coupé.

2. Procédé de contrôle selon la revendication 1, **caractérisé en ce qu'**il commande une rotation du moteur thermique (2) à une vitesse inférieure à 1000tr/mn.

3. Procédé de contrôle selon la revendication 2, **caractérisé en ce qu'**il commande une rotation du moteur thermique (2) à une vitesse comprise entre 600 et 750tr/mn.

4. Chaîne de traction pour un véhicule hybride, **caractérisée en ce qu'**elle comporte des moyens mettant en oeuvre un procédé de contrôle réalisé selon l'une quelconque des revendications précédentes.

5. Chaîne de traction selon la revendication 4, **caractérisée en ce qu'**elle comporte un train planétaire (4) comprenant trois éléments reliant respectivement le moteur thermique (2), les roues motrices (14) ainsi que la première machine auxiliaire (26), et la deuxième machine auxiliaire (20).

6. Chaîne de traction selon la revendication 5, **caractérisée en ce que** le moteur thermique (2) est lié au porte-satellites du train planétaire (4), la couronne extérieure aux roues motrices (14), et le pignon planétaire à la deuxième machine auxiliaire (20).

7. Chaîne de traction selon l'une quelconque des revendications 4 à 6, **caractérisée en ce que** l'énergie auxiliaire est un fluide sous pression.

8. Véhicule automobile hybride disposant d'une chaîne de traction utilisant une énergie auxiliaire, **caractérisé en ce que** cette chaîne de traction est réalisée selon l'une quelconque des revendications 4 à 7.

## Patentansprüche

1. Verfahren zur Steuerung eines Antriebsstrangs eines Hybridfahrzeugs, das über eine Brennkraftmaschine (2) verfügt, die direkt drehende Maschinen von Nebenfunktionen (40, 42, 44) antreibt, über eine erste Nebenmaschine (26), die eine Hilfsenergie verwendet, die in einem Betriebsmodus einen Antrieb des Fahrzeugs mit der Brennkraftmaschine, die gestoppt bleiben kann, ausführt, und über eine zweite Hilfsmaschine (20), die diese Energie verwendet, die in diesem Modus die Brennkraftmaschine antreiben kann, **dadurch gekennzeichnet, dass** es in diesem Betriebsmodus bei Notwendigkeit des Antreibens der drehenden Maschinen (40, 42, 44) zum Erhalten der Nebenfunktionen die zweite Nebenmaschine (20) steuert, um eine Drehung der Brennkraftmaschine (2) unter Beibehalten ihrer unterbrochenen Kraftstoffeinspritzung steuert.

2. Steuerverfahren nach Anspruch 1, **dadurch gekennzeichnet, dass** es eine Drehung der Brennkraftmaschine (2) mit einer Drehzahl kleiner als 1000 U/Min. steuert.

3. Steuerverfahren nach Anspruch 2, **dadurch gekennzeichnet, dass** es eine Drehung der Brennkraftmaschine (2) mit einer Drehzahl zwischen 600 und 750 U/Min. steuert.

4. Antriebsstrang für Hybridfahrzeug, **dadurch gekennzeichnet, dass** er Mittel umfasst, die ein Steuerverfahren ausführen, das nach einem der vorhergehenden Ansprüche ausgeführt wird.

5. Antriebsstrang nach Anspruch 4, **dadurch gekennzeichnet, dass** er ein Planetenumlaufgetriebe (4) umfasst, das drei Elemente umfasst, die jeweils die Brennkraftmaschine (2), die Antriebsräder (14) sowie die erste Hilfsmaschine (26) und die zweite Hilfsmaschine (20) verbinden.

6. Antriebsstrang nach Anspruch 5, **dadurch gekennzeichnet, dass** die Brennkraftmaschine (2) mit dem Planetenradträger des Plantetenumlaufgetriebes (4), dem Kranz außerhalb der Antriebsräder (14) und dem Planetenrad mit der zweiten Hilfsmaschine (20) verbunden ist.

7. Antriebsstrang nach einem der Ansprüche 4 bis 6, **dadurch gekennzeichnet, dass** die Hilfsenergie ein Fluid unter Druck ist.

8. Hybridkraftfahrzeug, das über einen Antriebsstrang verfügt, der eine Hilfsenergie verwendet, **dadurch gekennzeichnet, dass** dieser Antriebsstrang nach einem der Ansprüche 4 bis 7 hergestellt ist.

## Claims

1. A method for controlling a powertrain of a hybrid vehicle, provided with a heat engine (2) directly driving rotating machines of accessory functions (40, 42, 44), a first auxiliary machine (26) using an auxiliary energy which, in one operating mode, provides the vehicle with traction while the heat engine can remain stopped, and a second auxiliary machine (20) using this energy, that can, in this mode, drive the heat engine, **characterized in that**, in this operating mode, in case of a need to drive rotating machines (40, 42, 44) in order to obtain accessory functions, it controls the second auxiliary machine (20) to realize a rotation of the heat engine (2), while keeping the fuel injection of same cut off.

2. The method for controlling according to Claim 1, **characterized in that** it controls a rotation of the heat engine (2) at a speed less than 1000 rev/min.

3. The method for controlling according to Claim 2, **characterized in that** it controls a rotation of the heat engine (2) at a speed comprised between 600 and 750 rev/min.

4. A powertrain for a hybrid vehicle, **characterized in that** it comprises means implementing a method for controlling realized according to any one of the preceding claims.

5. The powertrain according to Claim 4, **characterized in that** it comprises a planetary gear (4) including three elements connecting respectively the heat engine (2), the drive wheels (14) and also the first auxiliary machine (26), and the second auxiliary machine (20).

6. The powertrain according to Claim 5, **characterized in that** the heat engine (2) is linked to the planetary carrier of the planetary gear (4), the outer ring to the drive wheels (14), and the sun gear to the second auxiliary machine (20).

7. The powertrain according to any one of Claims 4 to 6, **characterized in that** the auxiliary energy is a fluid under pressure.

8. A hybrid motor vehicle provided with a powertrain using an auxiliary energy, **characterized in that** this powertrain is realized according to any one of Claims 4 to 7.
